# FASCICULE DE BREVET EUROPEEN

(11) **EP 3 091 201 B1**
(45) Date de publication et mention de la délivrance du brevet: **11.04.2018**
(21) Numéro de dépôt: 16167865.1
(22) Date de dépôt: 02.05.2016
(51) Int. Cl.: F01D 25/24, F02C 7/04, F02C 7/047, F04D 19/02, F02C 3/04, F04D 29/02, F04D 29/52, F04D 29/70

(54) **BEC DE SÉPARATION COMPOSITE DE COMPRESSEUR DE TURBOMACHINE AXIALE**
VERBUND-TRENNWANDSPITZE EINES KOMPRESSORS EINER AXIALEN TURBOMASCHINE
COMPOSITE FRONT SEPARATION WALL OF AXIAL TURBINE ENGINE COMPRESSOR

(30) Priorité: 04.05.2015 BE 201505282
(43) Date de publication de la demande: 09.11.2016
(73) Titulaire: Safran Aero Boosters SA, 4041 Herstal (BE)
(72) Inventeur: BOUILLON, David, 1200 Woluwe-Saint-Lambert (BE); HERBAUT, M. Ghislain, 4257 Berloz (BE)
(74) Mandataire: Lecomte & Partners

(56) Documents cités:
- EP-A1- 1 801 389
- EP-A1- 2 505 789
- FR-A1- 2 989 734
- FR-A1- 3 005 693

## Description

### Domaine technique

L'invention a trait à une entrée d'air de turbomachine axiale. Plus précisément, l'invention concerne un bec de séparation de turbomachine axiale. L'invention traite également d'un procédé de fabrication d'un bec de séparation de turbomachine axiale.

### Technique antérieure

Les turbopropulseurs multi-flux sont développés pour respecter l'environnement. Le respect de l'environnement s'entend ici comme une limitation des nuisances sonores, tout comme la diminution de consommation. Dans l'optique d'optimiser leur poussée et leur rendement tout en réduisant les nuisances sonores, les turbopropulseurs travaillent avec plusieurs flux d'airs annulaires, par exemple deux ou trois.

Généralement, une turbomachine sépare un flux entrant en un flux primaire et en un flux secondaire ; ces deux derniers ont des formes de manches annulaires. Le flux primaire emprunte les compresseurs, une chambre de combustion, puis est détendu dans des turbines. Le flux secondaire contourne par l'extérieur le compresseur, la chambre de combustion, la turbine ; et regagne ensuite le flux primaire en sortie du turboréacteur. Les flux sont séparés par un bec de séparation circulaire placé en amont du compresseur, sa géométrie limite l'entrée d'air dans le compresseur.

Un bec de séparation doit être robuste car il est exposé aux ingestions lors de son fonctionnement. Il doit donc également permettre de supporter divers éléments, tel un redresseur amont de compresseur, un panneau acoustique. Il peut également loger un système de dégivrage dont il doit maintenir et protéger les conduites, les passages.

Le document EP1801389 A1 divulgue un bec de séparation d'un compresseur basse pression de turbomachine axiale. Le bec comprend un corps métallique annulaire formant un lien mécanique entre une virole interne à un panneau acoustique. Le bec de séparation comprend une bride axiale épousant l'intérieur du panneau acoustique pour sa fixation à l'aide de vis. Or, ce mode de fixation est peu robuste en raison de l'ajout de vis qui implique des concentrations de contraintes.

### Résumé de l'invention

### Problème technique

L'invention a pour objectif de résoudre au moins un des problèmes posés par l'art antérieur. Plus précisément, l'invention a pour objectif de renforcer l'assemblage d'un bec de séparation. L'invention a également pour objectif d'alléger un bec de séparation.

### Solution technique

On aura bien compris que l'invention a pour objet un bec de séparation comportant une cloison aval éventuellement composite ; et une cloison amont éventuellement métallique, avec un bord d'attaque circulaire et une excroissance de fixation dans l'épaisseur de la cloison aval. Suivant une autre approche, l'invention a pour objet un bec de séparation avec deux cloisons qui sont à l'extérieur du bord d'attaque et qui sont réalisées en deux matériaux différents, l'une d'elle présentant une portion d'ancrage intégrée dans l'autre pour les réunir.

L'invention a également pour objet un bec de séparation de turbomachine, notamment d'un compresseur basse pression de turbomachine axiale, le bec comprenant :une paroi annulaire amont avec un bord d'attaque circulaire, et une cloison annulaire aval, remarquable en ce que la paroi amont comprend une portion annulaire d'ancrage disposée dans l'épaisseur de la cloison aval de sorte à ancrer la cloison et la paroi l'une à l'autre.

Selon un mode avantageux de l'invention, la cloison aval comprend une surface annulaire externe et une surface annulaire interne, la portion d'ancrage étant à distance de la surface externe et de la surface interne.

Selon un mode avantageux de l'invention, la portion d'ancrage comprend au moins une aspérité d'ancrage, préférentiellement plusieurs aspérités d'ancrages réparties sur sa surface.

Selon un mode avantageux de l'invention, la portion d'ancrage comprend au moins un orifice d'ancrage, préférentiellement plusieurs orifices d'ancrage traversés par le matériau de la cloison aval, éventuellement les orifices sont hexagonaux.

Selon un mode avantageux de l'invention, la portion d'ancrage comprend un réseau de jonctions interconnectées, répétant éventuellement un motif sur la majorité axiale de la portion d'ancrage et/ou sur essentiellement tout le tour du bec de séparation.

Selon un mode avantageux de l'invention, les matériaux de la portion d'ancrage et de la cloison aval sont entremêlés, la portion d'ancrage étant majoritairement occupée par le matériau de la cloison aval.

Selon un mode avantageux de l'invention, la cloison aval et la paroi amont comprennent chacune des surfaces annulaires externes, lesdites surfaces étant dans le prolongement l'une de l'autre et/ou sont tangentes sur la circonférence.

Selon un mode avantageux de l'invention, la paroi amont comprend un épaississement annulaire de renforcement, le bord d'attaque étant éventuellement formé sur l'épaississement annulaire.

Selon un mode avantageux de l'invention, la paroi amont comprend un profil de révolution avec une portion délimitée par un arc, la portion d'ancrage s'étendant axialement depuis ledit arc, l'arc et/ou la portion s'étendant éventuellement sur la majorité de l'épaisseur de la paroi amont.

Selon un mode avantageux de l'invention, la portion d'ancrage forme une zone de moindre épaisseur sur la paroi amont, éventuellement la portion d'ancrage est délimitée en amont par au moins une, préférentiellement par au moins deux marches annulaires.

Selon un mode avantageux de l'invention, le bec de séparation comprend une virole externe entourée par la cloison aval, préférentiellement le bec de séparation comprend une rangée annulaire d'aubes statoriques supportées par la virole externe, la portion d'ancrage étant éventuellement disposée axialement au niveau de la rangée d'aubes, par exemple au droit des bords d'attaques desdites aubes.

Selon un mode avantageux de l'invention, la paroi amont comprend un crochet annulaire de fixation, préférentiellement orienté axialement vers l'aval, la virole externe étant éventuellement fixée au crochet annulaire.

Selon un mode avantageux de l'invention, la cloison aval comprend un matériau composite avec une matrice organique et des fibres ; la cloison aval étant éventuellement monobloc.

Selon un mode avantageux de l'invention, la cloison aval comprend une bride annulaire s'étendant radialement vers l'intérieur.

Selon un mode avantageux de l'invention, la cloison aval présente une épaisseur généralement constante axialement et/ou selon la circonférence du bec de séparation.

Selon un mode avantageux de l'invention, la portion d'ancrage est disposée au milieu de la surface externe et de la surface interne de la cloison aval.

Selon un mode avantageux de l'invention, la portion d'ancrage épouse la surface externe et la surface interne de la cloison aval.

Selon un mode avantageux de l'invention, la portion d'ancrage forme une tôle, notamment une tôle perforée.

Selon un mode avantageux de l'invention, la portion d'ancrage comprend une face annulaire interne et une face annulaire externe, au moins une ou chacune desdites faces étant recouverte et/ou en contact de la cloison aval.

Selon un mode avantageux de l'invention, la paroi amont est métallique, notamment en titane ou en alliage de titane.

Selon un mode avantageux de l'invention, le crochet annulaire comprend au moins une surface tubulaire, et/ou forme une alvéole annulaire profilée axialement.

Selon un mode avantageux de l'invention, le bec de séparation comprend une cavité annulaire délimitée à l'extérieur par la cloison aval, et éventuellement par la virole externe du côté interne.

Selon un mode avantageux de l'invention, la portion d'ancrage peut être discontinue selon la circonférence du bec de séparation.

Selon un mode avantageux de l'invention, la cloison aval est pleine.

Selon un mode avantageux de l'invention, la portion d'ancrage présente un profil de révolution courbe.

Selon un mode avantageux de l'invention, la paroi amont est un bloc de jonction entre la cloison aval et la virole externe.

Selon un mode avantageux de l'invention, la portion d'ancrage est au moins généralement disposée au milieu de l'épaisseur de la cloison aval.

Selon un mode avantageux de l'invention, la cloison aval et la paroi amont comprennent une jonction circulaire externe lisse.

Selon un mode avantageux de l'invention, le profil de révolution de la surface externe de la paroi amont et/ou de la cloison aval est optionnellement droit, et/ou est généralement incliné de 5° à 30° par rapport à l'axe de révolution du bec de séparation.

Selon un mode avantageux de l'invention, la paroi amont et sa portion d'ancrage sont monobloc et/ou venus de matière.

L'invention a également pour objet une turbomachine comprenant un bec de séparation, remarquable en ce que le bec de séparation est conforme à l'invention, éventuellement la turbomachine comprend un compresseur avec une entrée délimitée par le bec de séparation.

Selon un mode avantageux de l'invention, la turbomachine comprend une soufflante, le bec de séparation entourant la soufflante, éventuellement la paroi amont présente une épaisseur constante et/ou est creuse.

Selon un mode avantageux de l'invention, la turbomachine comprend une nacelle, le bec de séparation étant formé sur la nacelle.

L'invention a également pour objet un procédé de fabrication d'un bec de séparation de turbomachine axiale, notamment d'un compresseur, le bec comprenant : une paroi annulaire amont avec un bord d'attaque circulaire, une cloison annulaire aval composite, le procédé comprenant une étape (a) fourniture ou fabrication d'une paroi annulaire amont, remarquable en ce que la paroi amont comprend une portion d'ancrage, et en ce que le procédé comprend une étape (b) moulage d'une cloison aval sur la portion d'ancrage de sorte à ancrer la paroi amont dans la cloison aval via la portion d'ancrage.

Selon un mode avantageux de l'invention, l'étape (b) moulage comprend l'application d'un moule d'injection contre la surface annulaire externe de la paroi amont.

De manière générale, les modes avantageux de chaque objet de l'invention sont également applicables aux autres objets de l'invention. Dans la mesure du possible, chaque objet de l'invention est combinable aux autres objets.

### Avantages apportés

Le bec de séparation favorise la réalisation d'un bec de séparation bi matériaux, ce qui autorise un renfort du bord d'attaque au plus juste, puis à prolonger le bec à l'aide d'une cloison composite pour optimiser l'allégement. Au global, une telle turbomachine devient plus légère ce qui réduit la consommation de l'aéronef correspondant. Le recours à plusieurs matériaux simplifie la réalisation de certaines formes. Des matériaux économiques peuvent être employés en fonction des contraintes qu'ils subissent.

L'épaisseur de la portion d'ancrage peut être réduite pour en diminuer la rigidité, ce qui limite les concentrations de contraintes, et évite la formation de points durs. La création d'une zone annulaire en treillis améliore l'interface. La cloison aval est liée à la paroi amont à l'aide d'une zone étendue axialement, l'accroche devient meilleure.

L'invention réduit le nombre d'interfaces entre les différents éléments, ce qui simplifie le montage et l'entretien.

### Brève description des dessins

La figure 1 représente une turbomachine axiale selon l'invention.
La figure 2 est un schéma d'un compresseur de turbomachine selon l'invention.
La figure 3 illustre une coupe d'un bec de séparation selon l'invention.
La figure 4 esquisse la paroi amont et sa portion d'ancrage selon l'invention.

### Description des modes de réalisation

Dans la description qui va suivre, les termes intérieur ou interne et extérieur ou externe renvoient à un positionnement par rapport à l'axe de rotation d'une turbomachine axiale. La direction axiale correspond à la direction le long de l'axe de rotation de la turbomachine.

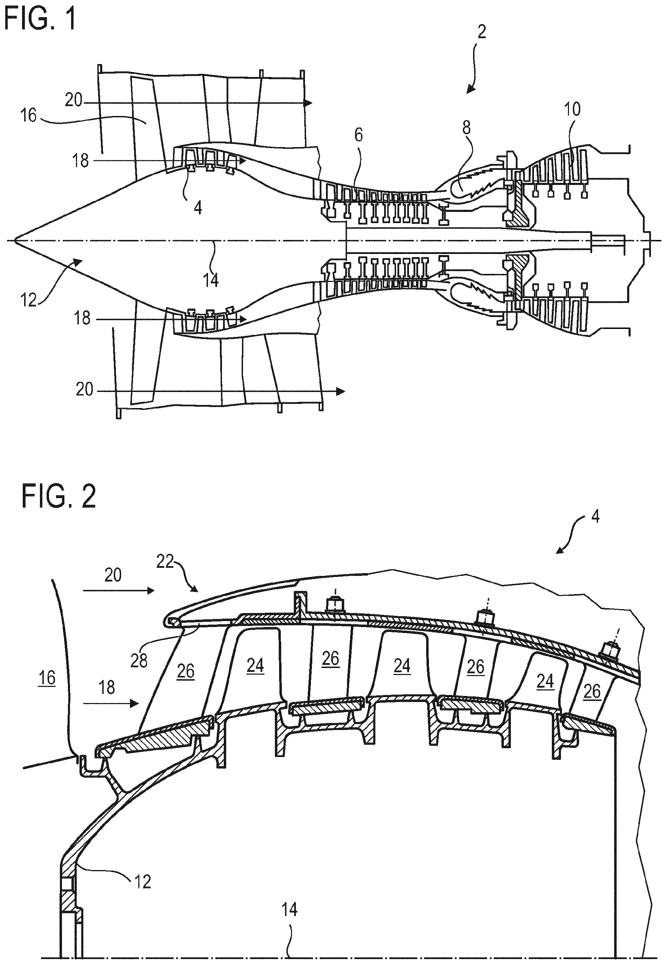

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8. Des moyens de démultiplication peuvent augmenter la vitesse de rotation transmise aux compresseurs.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale telle que celle de la figure 1. Le compresseur peut être un compresseur basse-pression 4. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression statique. Les aubes statoriques 26 s'étendent essentiellement radialement vers l'intérieur depuis leur support. Elles présentent des profils cambrés qui sont pivotés pour redresser axialement un flux annulaire avec une composante circonférentielle.

Trois redresseurs sont intégrés dans le carter externe du compresseur, les aubes correspondantes peuvent y être fixées par axes. Un redresseur amont, en entrée du compresseur, peut comprendre des aubes soudées à une virole externe 28. Cette virole externe 28 peut être portée en amont par le bec de séparation 22.

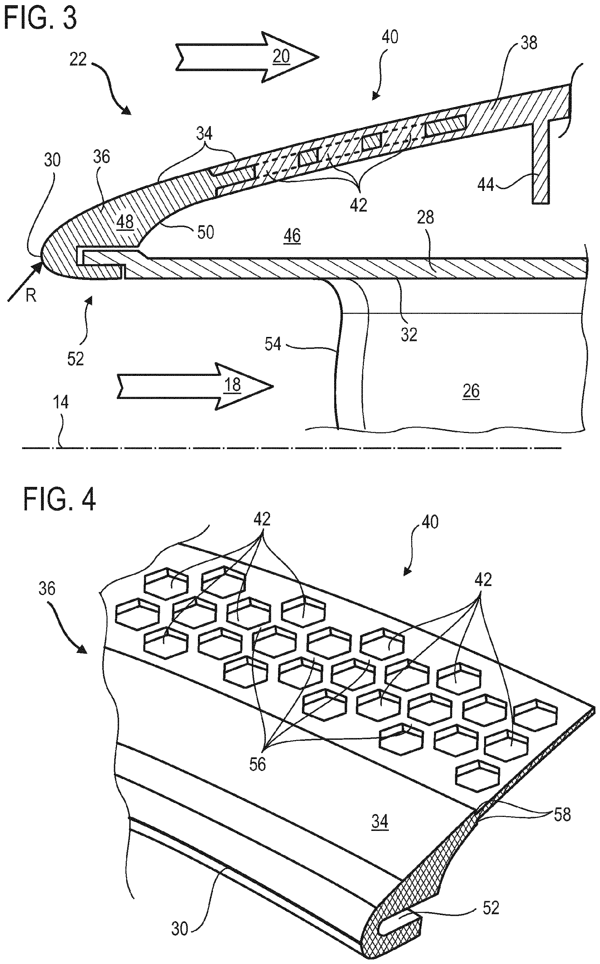

La figure 3 représente une coupe du bec de séparation 22 selon un plan passant par l'axe de rotation 14. Une extrémité externe d'aube statorique 26 apparaît.

Le bec de séparation 22 comprend un bord d'attaque 30 circulaire en amont où se divisent le flux primaire 18 et le flux secondaire 20. Le bec de séparation 22 présente une surface interne 32, essentiellement formée sur la virole externe 28, et une surface externe 34. Ces surfaces sont annulaires et se rejoignent au niveau du bord d'attaque 30. Les profils de révolution de la surface interne 32 et de la surface externe 34 peuvent être généralement droits, ils peuvent être inclinés l'un par rapport à l'autre de 5° à 60°, préférentiellement de 10° à 40°, éventuellement de 20° à 30°. Les profils de révolution sont autour d'un axe de révolution 14 qui coïncide avec l'axe de rotation 14 de la turbomachine.

Le bec de séparation 22 comprend une paroi annulaire amont 36, puis une cloison annulaire aval 38 selon le sens d'écoulement. La paroi amont 36 et la cloison aval 38 s'étendent vers l'extérieur et vers l'aval depuis le bord d'attaque 30 et forment la surface extérieure 34 du bec 22. La paroi amont 36 peut également s'étendre vers l'intérieur. La paroi amont 36 et la cloison aval 38 peuvent présenter une jonction lisse, leur surfaces externes 34 se prolongent et sont tangentes.

La paroi amont 36 peut être réalisée en métal, par exemple en titane. Ce matériau offre une résistance qui est nécessaire au niveau du bord d'attaque en cas de choc, par exemple une ingestion. Le métal offre également une conduction thermique bénéfique pour un dégivrage. Pour ensuite réduire la masse globale du bec de séparation 22, la cloison aval 38 peut être réalisée en un matériau composite. Ce matériau peut comprendre une matrice organique et des fibres. La matrice peut être du polyétherimide, (PEI), du polyétheréthercétone (PEEK) ou un matériau équivalent. Les fibres peuvent être des fibres de carbone, et/ou des fibres de graphite, et/ou des fibres de verre et/ou toutes autres fibres équivalentes. Les fibres peuvent être des fibres courtes, c'est-à-dire de longueur inférieure à 5,00 mm, préférentiellement inférieure à 2,00mm. Un tel composite offre un compromis entre gain de masse et rigidité, tout en offrant la possibilité de réduire l'épaisseur de la cloison aval 38.

Pour améliorer les conditions de leur réunion, la paroi amont 36 comprend une portion d'ancrage 40, préférentiellement annulaire. Cette portion 40 est disposée dans l'épaisseur de la cloison aval 38, par exemple à coeur, c'est-à-dire au milieu selon son épaisseur. La portion d'ancrage 40 offre au moins une face, préférentiellement deux faces sur lesquelles le matériau de la cloison 38 adhère. Pour améliorer la rétention, les faces peuvent présenter des aspérités telle des bosses ou des renflements.

La portion d'ancrage 40 peut comprendre au moins un orifice 42 traversant, préférentiellement plusieurs orifices 42 traversants qui peuvent former des aspérités. Ces orifices 42 permettent de lier la paroi amont 36 et la cloison aval 38 en entremêlant leurs matériaux. Le matériau de la cloison aval 38 pénètre et traverse les orifices 42 pour s'y ancrer. La zone axiale où la portion d'ancrage 40 est présente permet de renforcer la cloison aval 38. Celle-ci peut devenir composite, éventuellement à double renfort grâce à la portion d'ancrage et à ses éventuelles fibres. La portion d'ancrage 40 peut former un treillis de renfort, éventuellement bordé par des rubans pleins.

La cloison aval 38 peut comprendre une bride de fixation 44 annulaire qui s'étend radialement, et qui peut former une séparation pour délimiter un plenum pour un système de dégivrage (non représénté). Elle peut d'ailleurs en supporter des conduites d'adduction de fluide chaud. Elle peut présenter une série d'ouvertures de fixation (non représéntées) pour recevoir une bride d'un élément disposé en aval. Le bec de sépartion 22 peut comprendre une cavité annulaire 46, par exemple pour loger des équipements de la turbomachine. Cette cavité 46 peut être formée par la paroi amont 36, la paroi aval 38 et la virole externe 28. Elle peut être close en aval par les brides annulaires 44 évoquées ci-dessus.

La paroi amont 36 peut comprendre un épaississement annulaire 48 permettant de la renforcer, notamment face aux ingestions et pour mieux supporter la virole externe. Le bord d'attaque 30 peut être formé sur l'épaississement annulaire 48. Au niveau de l'épaississement 48, le profil de révolution du bec 22 présente un arc 50 sur un côté. Cet arc peut s'étendre sur la majorité de l'épaisseur de la paroi amont 36, l'épaisseur pouvant être mesurée perpendiculairement à la surface externe 34 de la paroi amont 36. L'arc 50 peut border la portion d'ancrage 40, de sorte à réduire la longueur axiale de la paroi amont 36.

La paroi amont 36 peut comprendre un crochet annulaire de fixation 52. Il forme une gorge ouverte. Ce moyen de fixation peut être employé pour y maintenir la virole externe 28 qui y vient en porte à faux. Le crochet 52 peut comprendre des surfaces de fixation tubulaires pour permettre un assemblage axial de la virole 28 dans la paroi amont 36. Le crochet 52 peut être aménagé avec des passages pour une circulation d'air chaud de dégivrage.

La portion d'ancrage 40 peut être disposée au niveau des aubes 26 supportées par la virole externe. Plus préciément, les bord d'attaques 54 des aubes 26 peuvent se prolonger radialement dans la portion d'ancrage 40. Ceci tend à réduire la partie massive de la paroi amont 36, et donc à alléger le bec 22.

Au niveau du bord d'attaque 30, le rayon R du profil de révolution de la paroi amont est inférieur à 100 mm, préférentiellement inférieur à 30 mm, plus préférentiellement inférieur ou égal à 5,00 mm. L'épaisseur de la cloison aval 38 est inférieure à 20 mm, préférentiellement inférieure à 10 mm, plus préférentiellement inférieure ou égale à 5,00 mm.

Le bec de séparation 22 correspond à une entrée de compresseur. Selon l'invention le bec de séparation peut également être adapté à une entrée de soufflante sur une nacelle de la turbomachine, pour former une lèvre de séparation.

La figure 4 monte un segment angulaire de la paroi amont 36 et sa portion d'ancrage 40 qui sont représentés en vue isométrique. La cloison aval n'est pas représentée par soucis de clarté. Le crochet 52 est visible.

La portion d'ancrage 40 présente une forme de feuille, ou de tôle. Elle est essentiellement fine, d'épaisseur constante. Elle s'étend généralement selon un plan prolongeant la surface externe 34 de la paroi amont 36, ou dans la continuité de la courbure générale de ladite surface externe 34.

Elle peut être perforée telle une tôle perforée. Les orifices 42 de la portion d'ancrage 40 peuvent être répartis sur son emprise, par exemple axialement et/ou selon la circonférence. Ils peuvent décrire un maillage, ou un motif répété. Ils peuvent être alignés. Les orifices 42 peuvent être des polygones, par exemple des triangles ou des hexagones tel que représenté. Le orifices 42 peuvent être séparés par des tiges 56 formant des jonctions 56. Les orifices 42 peuvent être imbriqués de sorte à former un treillis sur un zone axiale de la portion d'ancrage 40 ce qui permet de l'assouplir. La portion d'ancrage 40 peut être traversée, ou ajourée, sur 25% de sa surface, ou majoritairement perforée. C'est-à-dire que la majorité de son étendure est vide de matière.

La portion d'ancrage 40 peut former une zone avec une réduction d'épaisseur sur la paroi amont 36. Elle peut être délimitée axialement en amont par deux marches annulaires 58, qui peuvent former des épaulement circulaires.

Vu la configuration bi matériau du bec de séparation, en particulier de sa peau externe, il peut être fabriqué selon un procédé remarquable. Le procédé de fabrication du bec peut comprendre l'enchaînement des étapes suivantes :
(a) fourniture ou fabrication d'une paroi annulaire amont avec un bord d'attaque circulaire. La paroi amont peut être fabriquée par usinage, tel le tournage d'un élément brut cintré.
(b) moulage d'une cloison aval sur la portion d'ancrage. Ainsi, la paroi amont est ancrée, scellée à la cloison aval via la portion d'ancrage. L'étape (b) moulage peut comprendre l'application d'un moule d'injection contre la surface annulaire externe de la paroi amont. Un autre moule peut être appliqué à l'intérieur, et peut permettre de former la bride interne de la cloison. Lors de la fermeture du moule, une cavité de moulage est définie. Celle-ci loge la portion d'ancrage en attente de la résine.

## Revendications

1. Bec de séparation (22) de turbomachine (2), notamment d'un compresseur basse pression (4) de turbomachine (2) axiale, le bec (22) comprenant :
une paroi annulaire amont (36) avec un bord d'attaque (30) circulaire, et
une cloison annulaire aval (38) composite, **caractérisé en ce que**
la paroi amont (36) comprend une portion annulaire d'ancrage (40) disposée dans l'épaisseur de la cloison aval de sorte à ancrer la cloison et la paroi l'une à l'autre.

2. Bec (22) selon la revendication 1, **caractérisé en ce que** la cloison aval (38) comprend une surface annulaire externe (34) et une surface annulaire interne, la portion d'ancrage (40) étant à distance de la surface externe (34) et de la surface interne.

3. Bec (22) selon l'une des revendications 1 à 2, **caractérisé en ce que** la portion d'ancrage (40) comprend au moins une aspérité d'ancrage (42), préférentiellement plusieurs aspérités d'ancrages (42) réparties sur sa surface.

4. Bec (22) selon l'une des revendications 1 à 3, **caractérisé en ce que** la portion d'ancrage (40) comprend au moins un orifice d'ancrage (42), préférentiellement plusieurs orifices d'ancrage (42) traversés par le matériau de la cloison aval (38), éventuellement les orifices (42) sont hexagonaux.

5. Bec (22) selon l'une des revendications 1 à 4, **caractérisé en ce que** la portion d'ancrage (40) comprend un réseau de jonctions (56) interconnectées, répétant éventuellement un motif sur la majorité axiale de la portion d'ancrage (40) et/ou sur essentiellement tout le tour du bec de séparation (22).

6. Bec (22) selon l'une des revendications 1 à 5, **caractérisé en ce que** les matériaux de la portion d'ancrage (40) et de la cloison aval (38) sont entremêlés, la portion d'ancrage (40) étant majoritairement occupée par le matériau de la cloison aval (38).

7. Bec (22) selon l'une des revendications 1 à 6, **caractérisé en ce que** la cloison aval (38) et la paroi amont (36) comprennent chacune des surfaces annulaires externes (34), lesdites surfaces (34) étant dans le prolongement l'une de l'autre et/ou sont tangentes sur la circonférence.

8. Bec (22) selon l'une des revendications 1 à 7, **caractérisé en ce que** la paroi amont (36) comprend un épaississement annulaire de renforcement (48), le bord d'attaque (30) étant éventuellement formé sur l'épaississement annulaire (48).

9. Bec (22) selon l'une des revendications 1 à 8, **caractérisé en ce que** la portion d'ancrage (40) forme une zone de moindre épaisseur sur la paroi amont (36), éventuellement la portion d'ancrage (40) est délimitée en amont par au moins une, préférentiellement par au moins deux marches annulaires (58).

10. Bec (22) selon l'une des revendications 1 à9, **caractérisé en ce qu'**il comprend une virole externe (28) entourée par la cloison aval (38), préférentiellement le bec de séparation (22) comprend une rangée annulaire d'aubes statoriques (26) supportées par la virole externe (28), la portion d'ancrage (40) étant éventuellement disposée axialement au niveau de la rangée d'aubes (26), par exemple au droit des bords d'attaques (54) desdites aubes (26).

11. Bec (22) selon l'une des revendications 1 à 10, **caractérisé en ce que** la cloison aval (38) comprend un matériau composite avec une matrice organique et des fibres ; la cloison aval (38) étant éventuellement monobloc.

12. Turbomachine (2) comprenant un bec de séparation, **caractérisée en ce que** le bec de séparation (22) est conforme à l'une des revendications 1 à 11, éventuellement la turbomachine comprend un compresseur avec une entrée délimitée par le bec de séparation.

13. Turbomachine (2) selon la revendication 12, **caractérisée en ce qu'**elle comprend une soufflante, le bec de séparation entourant la soufflante, éventuellement la paroi amont présente une épaisseur constante et/ou est creuse.

14. Procédé de fabrication d'un bec de séparation (22) de turbomachine axiale (2), notamment d'un compresseur (4), le bec (22) comprenant :
une paroi annulaire amont (36) avec un bord d'attaque (30) circulaire,
une cloison annulaire aval (38) composite,
le procédé comprenant une étape (a) fourniture ou fabrication d'une paroi annulaire amont (36),
**caractérisé en ce que**
la paroi amont (36) comprend une portion d'ancrage (40),
et **en ce que** le procédé comprend une étape (b) moulage d'une cloison aval (38) sur la portion d'ancrage (40) de sorte à ancrer la paroi amont (36) dans la cloison aval (38) via la portion d'ancrage (40), le bec de séparation (22) étant éventuellement conforme à l'une des revendications 1 à 11.

15. Procédé selon la revendication 14, **caractérisé en ce que** l'étape (b) moulage comprend l'application d'un moule d'injection contre la surface annulaire externe (34) de la paroi amont (36).

## Patentansprüche

1. Trennnase (22) für eine Turbomaschine (2), insbesondere für einen Niederdruckverdichter (4) einer axialen Turbomaschine (2), wobei die Trennnase (22) umfasst:
eine stromaufwärtige ringförmige Wand (36) mit einer kreisförmigen Vorderkante (30);
eine stromabwärtige ringförmige Verbundwerkstoff-Trennwand (38), **dadurch gekennzeichnet, dass**
die stromaufwärtige Wand (36) einen ringförmigen Verankerungsteil (40) umfasst, der in der Dicke der stromabwärtige Trennwand angeordnet ist, um die Trennwand und die Wand aneinander zu verankern.

2. Trennnase (22) nach Anspruch 1, **dadurch gekennzeichnet, dass** die stromabwärtige Trennwand (38) eine äußere ringförmige Oberfläche (34) und eine innere ringförmige Oberfläche umfasst, wobei sich der Verankerungsteil (40) in einem Abstand von der äußeren Oberfläche (34) und der inneren Oberfläche befindet.

3. Trennnase (22) nach einem der Ansprüche 1 und 2, **dadurch gekennzeichnet, dass** der Verankerungsteil (40) mindestens eine Verankerungsrauigkeit (42), bevorzugt mehrere über seine Oberfläche verteilte Verankerungsrauigkeiten (42), umfasst.

4. Trennnase (22) nach einem der Ansprüche 1 bis 3, **dadurch gekennzeichnet, dass** der Verankerungsteil (40) mindestens eine Verankerungsöffnung (42), bevorzugt mehrere Verankerungsöffnungen, umfasst, durch die das Material der stromabwärtige Trennwand (38) hindurch verläuft, wobei die Öffnungen (42) eventuell sechseckig sind.

5. Trennnase (22) nach einem der Ansprüche 1 bis 4, **dadurch gekennzeichnet, dass** der Verankerungsteil (40) ein Netzwerk von miteinander verbundenen Verbindungsstellen (56) aufweist, die eventuell ein Muster über den axialen Großteil des Verankerungsteils (40) und/oder im Wesentlichen um die Trennnase (22) herum wiederholten.

6. Trennnase (22) nach einem der Ansprüche 1 bis 5, **dadurch gekennzeichnet, dass** die Materialien des Verankerungsteils (40) und der stromabwärtige Trennwand (38) ineinandergreifen, wobei das Material der stromabwärtige Trennwand (38) den Großteil des Verankerungsteils (40) einnimmt.

7. Trennnase (22) nach einem der Ansprüche 1 bis 6, **dadurch gekennzeichnet, dass** die stromabwärtige Trennwand (38) und die stromaufwärtige Wand (36) jede äußere ringförmige Oberflächen (34) umfassen, wobei die Oberflächen (34) sich auf einer Linie miteinander erstrecken und/oder tangential zum Umfang sind.

8. Trennnase (22) nach einem der Ansprüche 1 bis 7, **dadurch gekennzeichnet, dass** die stromaufwärtige Wand (36) einen ringförmigen verdickten Verstärkungsteil (48) umfasst, wobei die Vorderkante (30) eventuell an dem ringförmigen verdickten Teil (48) gebildet ist.

9. Trennnase (22) nach einem der Ansprüche 1 bis 8, **dadurch gekennzeichnet, dass** der Verankerungsteil (40) eine Zone geringerer Dicke an der stromaufwärtigen Wand (36) bildet; eventuell ist der Verankerungsteil (40) stromaufwärts durch mindestens eine, bevorzugt durch mindestens zwei ringförmige Stufen (58) begrenzt.

10. Trennnase (22) nach einem der Ansprüche 1 bis 9, **dadurch gekennzeichnet, dass** sie einen äußeren Ring (28), der von der stromabwärtige Trennwand (38) umgeben ist, umfasst; bevorzugt umfasst die Trennnase (22) eine ringförmige Reihe von Statorleitschaufeln (26), die von dem äußeren Ring (28) getragen werden, wobei der Verankerungsteil (40) eventuell axial auf der Höhe der Reihe von Leitschaufeln (26) angeordnet ist, beispielsweise auf einer Linie mit den Vorderkanten (54) dieser Leitschaufeln (26).

11. Trennnase (22) nach einem der Ansprüche 1 bis 10, **dadurch gekennzeichnet, dass** die stromabwärtige Trennwand (38) einen Verbundwerkstoff mit einer organischen Matrix und Fasern umfasst; wobei die stromabwärtige Trennwand (38) eventuell massiv ist.

12. Turbomaschine (2), umfassend eine Trennnase, **dadurch gekennzeichnet, dass** die Trennnase (22) gemäß einem der Ansprüche 1 bis 11 ist; eventuell umfasst die Turbomaschine einen Verdichter mit einem Einlass, der durch die Trennnase begrenzt wird.

13. Turbomaschine (2) nach Anspruch 12, **dadurch gekennzeichnet, dass** sie ein Gebläse umfasst, wobei die Trennnase das Gebläse umgibt; eventuell weist die stromaufwärtige Wand eine konstante Dicke auf und/oder ist hohl.

14. Verfahren zur Herstellung einer Trennnase (22) für eine axiale Turbomaschine (2), insbesondere für einen Verdichter (4), wobei die Nase (22) umfasst:
eine stromaufwärtige ringförmige Wand (36) mit einer kreisförmigen Vorderkante (30);
eine stromabwärtige ringförmige Verbundwerkstoff-Trennwand (38),
wobei das Verfahren einen Schritt (a) des Vorsehens oder Produzierens einer stromaufwärtigen ringförmigen Wand (36) umfasst,
**dadurch gekennzeichnet, dass**
die stromaufwärtige Wand (36) einen Verankerungsteil (40) umfasst,
und dass das Verfahren einen Schritt (b) des Anformens einer stromabwärtige Trennwand (38) an dem Verankerungsteil (40) umfasst, um die stromaufwärtige Wand (36) mittels des Verankerungsteils (40) in der stromabwärtige Trennwand (38) zu verankern, wobei die Trennnase (22) nach einem der Ansprüche 1 bis 11 ist.

15. Verfahren nach Anspruch 14, **dadurch gekennzeichnet, dass** der Anformschritt (b) das Anbringen einer Spritzgussform an der äußeren ringförmigen Oberfläche (34) der stromaufwärtigen Wand (36) umfasst.

## Claims

1. Splitter nose (22) for a turbomachine (2), in particular for a low-pressure compressor (4) of an axial turbomachine (2), the splitter nose (22) comprising:
an upstream annular wall (36) with a circular leading edge (30);
a downstream annular composite partition (38),
**characterized in that**
the upstream wall (36) comprises an annular anchoring portion (40) arranged in the thickness of the downstream partition so as to anchor the partition and the wall to one another.

2. Splitter nose (22) according to Claim 1, **characterized in that** the downstream partition (38) comprises an outer annular surface (34) and an inner annular surface, the anchoring portion (40) being at a distance from the outer surface (34) and the inner surface.

3. Splitter nose (22) according to either of Claims 1 and 2, **characterized in that** the anchoring portion (40) comprises at least one anchoring roughness (42), preferably multiple anchoring roughnesses (42) distributed over its surface.

4. Splitter nose (22) according to one of Claims 1 to 3, **characterized in that** the anchoring portion (40) comprises at least one anchoring opening (42), preferably multiple anchoring openings (42) through which passes the material of the downstream partition (38), possibly the openings (42) are hexagonal.

5. Splitter nose (22) according to one of Claims 1 to 4, **characterized in that** the anchoring portion (40) comprises a network of interconnected junctions (56), possibly repeating a pattern over the axial majority of the anchoring portion (40) and/or essentially all around the splitter nose (22).

6. Splitter nose (22) according to one of Claims 1 to 5, **characterized in that** the materials of the anchoring portion (40) and of the downstream partition (38) are intermeshed, the material of the downstream partition (38) occupying the majority of the anchoring portion (40).

7. Splitter nose (22) according to one of Claims 1 to 6, **characterized in that** the downstream partition (38) and the upstream wall (36) each comprise outer annular surfaces (34), wherein said surfaces (34) extend in line with one another and/or are tangential on the circumference.

8. Splitter nose (22) according to one of Claims 1 to 7, **characterized in that** the upstream wall (36) comprises a strengthening annular thickened portion (48), the leading edge (30) possibly being formed on the annular thickened portion (48).

9. Splitter nose (22) according to one of Claims 1 to 8, **characterized in that** the anchoring portion (40) forms a zone of lesser thickness on the upstream wall (36), possibly the anchoring portion (40) is delimited upstream by at least one, preferably by at least two annular steps (58).

10. Splitter nose (22) according to one of Claims 1 to 9, **characterized in that** it comprises an outer shroud (28) surrounded by the downstream partition (38), preferably the splitter nose (22) comprises an annular row of stator vanes (26) supported by the outer shroud (28), the anchoring portion (40) being possibly arranged axially at the level of the row of vanes (26), for example in line with the leading edges (54) of said vanes (26).

11. Splitter nose (22) according to one of Claims 1 to 10, **characterized in that** the downstream partition (38) comprises a composite material with an organic matrix and fibres; the downstream partition (38) possibly being solid.

12. Turbomachine (2) comprising a splitter nose, **characterized in that** the splitter nose (22) is in accordance with one of Claims 1 to 11, possibly the turbomachine comprises a compressor with an inlet delimited by the splitter nose.

13. Turbomachine (2) according to Claim 12, **characterized in that** it comprises a fan, the splitter nose surrounding the fan, possibly the upstream wall has a constant thickness and/or is hollow.

14. Method for producing a splitter nose (22) for an axial turbomachine (2), in particular for a compressor (4), the nose (22) comprising:
an upstream annular wall (36) with a circular leading edge (30);
a composite downstream annular partition (38),
the method comprising a step (a) of providing or producing an upstream annular wall (36),
**characterized in that**
the upstream wall (36) comprises an anchoring portion (40),
and **in that** the method comprises a step (b) of moulding a downstream partition (38) onto the anchoring portion (40) so as to anchor the upstream wall (36) in the downstream partition (38) via the anchoring portion (40), the splitter nose (22) being according to one of Claims 1 to 11.

15. Method according to Claim 14, **characterized in that** the moulding step (b) involves the application of an injection mould against the outer annular surface (34) of the upstream wall (36).
